# EUROPÄISCHE PATENTSCHRIFT

(11) **EP 3 059 616 B1**
(45) Veröffentlichungstag und Bekanntmachung des Hinweises auf die Patenterteilung: **30.05.2018**
(21) Anmeldenummer: 15155776.6
(22) Anmeldetag: 19.02.2015
(51) Int. Cl.: G01V 8/10, F16P 3/14

(54) **OPTISCHER SENSOR**
OPTICAL SENSOR
CAPTEUR OPTIQUE

(43) Veröffentlichungstag der Anmeldung: 24.08.2016
(73) Patentinhaber: Leuze electronic GmbH + Co KG, 73277 Owen/Teck (DE)
(72) Erfinder: FELLER, Bernhard, 86316 Friedberg (DE); SILLGE, Ray, 80689 München (DE); PATZ, Jürgen, 72660 Beuren (DE)
(74) Vertreter: Ruckh, Rainer Gerhard

(56) Entgegenhaltungen:
- EP-A1- 2 581 759
- EP-A1- 2 746 821
- DE-U1-202007 008 540
- US-A1- 2009 319 215

## Beschreibung

Die Erfindung betrifft einen optischen Sensor gemäß dem Oberbegriff des Anspruchs 1.

Bei derartigen optischen Sensoren erfolgt die Objekterkennung allgemein durch Erfassen der Unterbrechung von Lichtstrahlen des optischen Sensors bedingt durch einen Objekteingriff im Überwachungsbereich. Im einfachsten Fall weist der optische Sensor nur einen Sender und einen zugeordneten Empfänger auf, die eine Strahlachse zur Objektdetektion bilden. Der optische Sensor kann dann als Lichtschranke oder Reflexionslichtschranke ausgebildet sein. Alternativ kann der optische Sensor mehrere Sender- /Empfängerpaare, das heißt mehrere Strahlachsen aufweisen. In diesem Fall bildet der optische Sensor einen Lichtvorhang beziehungsweise einen Reflex-Lichtvorhang.

Generell werden derartige optische Sensoren im Bereich der Sicherheitstechnik eingesetzt, wobei dann die optischen Sensoren beispielsweise zur Absicherung von Gefahrenbereichen an Maschinen und Anlagen eingesetzt werden. Wird mit dem optischen Sensor ein gefahrbringendes Eindringen in den Gefahrenbereich detektiert, generiert der optische Sensor ein Schaltsignal derart, dass mit diesem die Maschine oder Anlage stillgesetzt wird, wodurch ein sicherer Zustand hergestellt wird, in welchem keine Gefährdungen von der Maschine oder Anlage mehr ausgehen können.

Damit ein solcher optischer Sensor im Bereich der Sicherheitstechnik eingesetzt werden kann, muss dieser die hierfür geltenden normativen Sicherheitsanforderungen erfüllen, wobei die Erfüllung dieser Anforderungen von einer Sicherheitsbehörde abgeprüft wird.

Bei bekannten optischen Sensoren sind hierzu Überwachungsschaltungen vorgesehen, um insbesondere die Funktion der Sensorkomponenten, das heißt des Senders und des Empfängers sowie die daran angeschlossenen elektronischen Bauteile, wie einen Verstärker, der die Empfangssignale eines Empfängers verstärkt, zu überprüfen.

Derartige Überwachungsschaltungen sind äußerst aufwändig, da diese die Funktion von Sender und Empfänger über deren kompletten Dynamikbereich überwachen müssen. Mit Dynamikbereich sind einerseits der Variationsbereich der Sendeleistung und auch der Variationsbereich der Pegel der Empfangssignale gemeint. Da mit dem optischen Sensor beliebige Objekte in unterschiedlichen Positionen oder Entfernungen und mit unterschiedlichen Oberflächenbeschaffenheiten sicher erkannt werden müssen, ist der Dynamikbereich entsprechend groß. Damit ist auch ein hoher Aufwand für die Überwachungsschaltungen verbunden. Dies bedingt wiederum einen hohen Aufwand bei der Abnahme des optischen Sensors durch die Sicherheitsbehörde.

Die US 2009/0319215 A1 betriff einen optischen Sensor zur Erkennung von Objekten wie Banknoten. Der Sensor umfasst eine Licht emittierende Sendeeinheit und eine Empfangseinheit, die das vom Sender emittierte und über das Objekt geführte Licht emittiert. Das analoge Empfangssignal wird mittels eines Analog-Digital-Wandlers mit einer Auflösung von 256 oder 1024 Stufen digitalisiert. Zur Kalibrierung des Sensors wird dieses digitalisierte Signal mit einem Referenzsignal verglichen.

Die EP 2 746 821 A1 betrifft einen optischen Sensor, der als Sensorkomponenten eine Beleuchtungseinheit, die eine Lichtlinie erzeugt, und eine Kamera umfasst. Diesen Sensorkomponenten ist eine nicht dargestellte Auswerteeinheit zugeordnet.

Zur Testung der wenigstens einen Kamera werden mit dieser aufgenommene Bilder bei ausgeschalteter Beleuchtungseinheit oder bei Projektion eines Lichtmusters in den Sichtbereich der Kamera oder bei Erzeugung eines der Lichtlinie aufgeprägten, sich zeitlich ändernden Testmusters in der Auswerteeinheit ausgewertet.

Der Erfindung liegt die Aufgabe zugrunde, für einen optischen Sensor der eingangs genannten Art mit möglichst geringem Aufwand eine möglichst vollständige Funktionsprüfung zu ermöglichen.

Die Erfindung betrifft einen optischen Sensor zur Erfassung von Objekten in einem Überwachungsbereich und umfasst wenigstens einen Lichtstrahlen emittierenden Sender und wenigstens einen Lichtstrahlen empfangenden Empfänger. Der Sender und der Empfänger sind so angeordnet, dass bei freiem Überwachungsbereich die Lichtstrahlen des Senders ungehindert auf den Empfänger treffen und bei einem Objekteingriff im Überwachungsbereich die Lichtstrahlen auf das Objekt treffen und nicht oder nur unvollständig zum Empfänger gelangen. Eine Auswerteeinheit ist vorgesehen, in welcher in Abhängigkeit von am Ausgang des Empfängers anstehenden Empfangssignalen ein binäres Schaltsignal generiert wird, dessen Schaltzustände angeben, ob sich ein Objekt im Überwachungsbereich befindet oder nicht. Testmittel sind vorgesehen, mittels derer der Sender derart betrieben ist, dass er ein sich in den Lichtstrahlen unterscheidendes Testsignal emittiert. Bei freiem Überwachungsbereich wird das empfangene Testsignal in ein digitales Ausgangssignal gewandelt und dieses mit einem in den Testmitteln gespeicherten digitalen Sollsignal für eine Fehlerkontrolle des optischen Sensors verglichen.

Der erfindungsgemäße optische Sensor arbeitet generell nach dem Lichtschrankenprinzip, wobei der optische Sensor einerseits als einzelne Einweglichtschranke mit einem Sender- / Empfängerpaar beziehungsweise als nach dem Einweglichtschrankenprinzip arbeitender Lichtvorhang mit einer Mehrzahl von Sender-/ Empfängerpaare ausgebildet sein kann. Andererseits kann der optische Sensor als Reflexionslichtschranke mit einem Sender-/ Empfängerpaar oder als nach dem Reflexionslichtschrankenprinzip arbeitender Reflex-Lichtvorhang ausgebildet sein.

Generell ist bei einem derartigen optischen Sensor bei freiem Überwachungsbereich ein definierter Strahlengang derart gegeben, dass die von dem oder jedem Sender emittierten Lichtstrahlen ungehindert auf den zugeordneten Empfänger gelangen. Eine Objekterfassung erfolgt dadurch, dass in eine Auswerteeinheit die Unterbrechung der Lichtstrahlen des oder wenigstens eines Senders durch den veränderten Signalpegel am zugeordneten Empfänger registriert wird. Erfindungsgemäß wird der definierte Strahlengang der Lichtstrahlen bei freiem Überwachungsbereich zur Testung des optischen Sensors ausgewertet.

Hierzu steuern die Testmittel den oder die Sender derart an, dass diese definierte Testsignale aussenden, die sich in charakteristischer Weise von den während des Arbeitsbereichs von den Sendern emittierten Lichtstrahlen unterscheiden. Dann wird das durch die Testsignale empfangsseitig generierte digitale Ausgangssignal mit einem in den Testmitteln gespeicherten digitalen Sollsignal, das den fehlerfreien Zustand des optischen Sensors definiert, verglichen. Dabei definiert das Sollsignal generell den Signalzustand des digitalen Ausgangssignals bei freiem Überwachungsbereich, da nur dort definierte, von einem Objekt unabhängige Signalverhältnisse vorliegen.

Nur bei fehlerfrei arbeitendem optischen Sensor stimmt das digitale Ausgangssignal mit dem digitalen Sollsignal überein, das heißt durch Feststellung einer Abweichung des digitalen Ausgangssignals vom digitalen Sollsignal wird ein Fehler des optischen Sensors aufgedeckt.

Ein wesentlicher Vorteil der erfindungsgemäßen Testung besteht darin, dass mit dieser nicht nur die optischen Komponenten einer Strahlachse, das heißt eines Sender-/ Empfängerpaares getestet werden, sondern auch die elektronischen Komponenten zur Signalauswertung der optischen Signale. So kann mit der erfindungsgemäßen Testung die ordnungsgemäße Funktion des Senders und einer diesem nachgeordneten Sendeoptik, die Funktion des Empfängers und einer diesem vorgeordneten Empfangsoptik und schließlich auch die Schaltungsanordnung zur Verstärkung der Empfangssignale des Empfängers getestet werden.

Bei einem optischen Sensor mit mehreren Strahlachsen, das heißt mehreren Sender-/ Empfängerpaaren können alle Sender-/ Empfängerpaare einzeln mit der erfindungsgemäßen Testung getestet werden.

Ein besonderer Vorteil der erfindungsgemäßen Testung liegt darin, dass aufwändige Überwachungsschaltungen zur Fehlerkontrolle bestimmter Bauelemente über deren gesamten Dynamikbereich entfallen können.

Trotz dieser erheblichen Vereinfachung erfolgt mit der erfindungsgemäßen Testung eine vollständige Funktionsprüfung des optischen Sensors, so dass der so getestete optische Sensor im Bereich der Sicherheitstechnik eingesetzt werden kann.

Dabei erfolgt vorteilhaft mit diesem eine zyklische Testung.

Gemäß einer ersten Variante wird bei Aufdeckung eines Fehlerfalls eine Fehlermeldung generiert.

Alternativ oder zusätzlich wird bei Aufdeckung eines Fehlerfalls eine Sicherheitsmaßnahme ausgelöst.

Insbesondere wird bei Aufdeckung eines Fehlerfalls eine gefahrbringende externe Einheit deaktiviert, wobei vorteilhaft ein Gefahrenbereich an der externen Einheit mit dem optischen Sensor überwacht wird.

Gemäß einer besonders vorteilhaften Ausgestaltung der Erfindung sind die Testmittel in dem optischen Sensor integriert.

Vorteilhaft sind die Testmittel Bestandteil der Auswerteeinheit.

Diese kompakte und kostengünstige Ausführungsform eignet sich insbesondere für nach dem Reflexionslichtschrankenprinzip arbeitende optische Sensoren, wo Sender und Empfänger in einem Gehäuse integriert sind und eine Auswerteeinheit sowohl die Steuerung des oder der Sender als auch die Auswertung der Empfangssignale des oder jedes Empfängers übernimmt.

Alternativ weisen die Testmittel eine Testeinheit auf, die über einen Testeingang an den optischen Sensor anschließbar ist.

Mit den Testmitteln erfolgt allgemein eine Änderung der von dem oder den Sendern emittierten Lichtstrahlen. Dies bedeutet, dass die Lichtstrahlen, die der oder jeder Sender in einem normalen Betrieb emittiert, durch die Testmittel während der Phasen der Testung in charakteristischer Weise geändert werden. Im einfachsten Fall kann die Aussendung der Lichtstrahlen unterbrochen werden. Alternativ werden den Lichtstrahlen Änderungen aufgeprägt, vorzugsweise aufmoduliert. Mit den so geänderten Lichtstrahlen kann wie mit den ungeänderten Lichtstrahlen die Überwachungsfunktion mit dem optischen Sensor durchgeführt werden.

Mit den geänderten Lichtstrahlen wird ein digitales Ausgangssignal vom Empfänger generiert, das im fehlerfreien Fall dem Sollsignal, das heißt einer bestimmten Erwartungshaltung entspricht. Durch die Testung bleibt jedoch das binäre Schaltsignal, welches das Ausgangssignal des optischen Sensors darstellt, unverändert.

Vorteilhaft emittiert der oder jeder Sender als Testsignal ein Lichtsignal mit bestimmter Impulsanzahl, Impulsfrequenz, Impulsbreite und/oder Amplitude.

Vorteilhaft werden durch die Testsignale im fehlerfreien Fall digitale Ausgangssignale mit bestimmten Merkmalen des digitalen Ausgangssignals generiert, die als Sollsignale abgespeichert werden können.

Insbesondere können Merkmale des Schaltsignals von Impulsbreiten eines oder mehrerer Signalpulse des digitalen Ausgangssignals gebildet sein.

Weiterhin können Merkmale des Sollsignals von Impulsabständen zwischen Signalpulsen des digitalen Ausgangssignals gebildet sein.

Desweiteren können Merkmale des Sollsignals von Signalpegeln eines oder mehrerer Signalpulse des digitalen Ausgangssignals gebildet sein.

Schließlich können Merkmale des Sollsignals von Einschaltflanken und/oder Ausschaltflanken von Signalpulsen des digitalen Ausgangssignals gebildet sein.

Gemäß einer konstruktiv vorteilhaften Ausgestaltung der Erfindung ist zur Generierung des digitalen Ausgangssignals ein Schwellwertgenerator vorgesehen.

Besonders vorteilhaft sind zwischen dem Empfänger und dem Schwellwertgenerator ein Verstärker und ein diesem nachgeschalteter Tiefpass vorgesehen. Gemäß einer Variante der Erfindung werden die Testsignale nicht periodisch wiederholt.

Mit dieser Maßnahme wird die Sicherheit des erfindungsgemäßen optischen Sensors erheblich erhöht, da hiermit Fehlerquellen bedingt durch Schwingungen des binären Schaltsignals beziehungsweise des digitalen Ausgangssignals eliminiert werden können. Durch Fehler in der Ausgangsbeschaltung, insbesondere in der Ansteuerschaltung des Schaltausgangs, kann es zur periodischen Schwingungen des Schaltsignals kommen. Dies kann dann zu Fehlerzuständen führen, wenn zu Testzwecken periodische Testsignale generiert werden. Ein fehlerfreier Zustand liegt dann vor, wenn diese sendeseitig generierten, den Lichtstrahlen aufgeprägten Testsignale bei freiem Überwachungsbereich genauso am Empfänger empfangen werden. Wenn nun zufällig durch Fehler in der Ansteuerschaltung eine der Periode der Testsignale entsprechende periodische Schwingung des Ausgangssignals beziehungsweise Schaltsignals auftritt und dann noch der Lichtweg der Lichtstrahlen im Überwachungsbereich unterbrochen ist, dann wird durch das fehlerinduzierte Schwingen des Ausgangs- oder Schaltsignals eine erfolgreiche Testung und damit ein fehlerfreie Zustand des optischen Sensors vorgetäuscht obwohl diese überhaupt nicht vorliegen. Dies führt zu einem unsicheren Zustand des optischen Sensors.

Diese Fehlerquelle wird auf einfache Art dadurch vermieden, dass die Testsignale aperiodisch generiert werden, das heißt es wird eine nicht periodische Folge von Testsignalen generiert. Diese können eindeutig von fehlerhaften Schwingungen des Ausgangs- beziehungsweise Schaltsignals unterschieden werden, da diese immer periodisch auftreten.

Gemäß einer besonders einfachen und vorteilhaften Ausgestaltung sind wenigstens zwei unterschiedliche Pausen zwischen zwei Testsignalen vorgesehen.

Im einfachsten Fall ist zwischen zwei Testsignalen einmal eine kürzere Pause und nachfolgend eine längere Pause zwischen zwei Testsignalen vorgesehen, was zyklisch wiederholt wird.

Alternativ können die Testsignale mit einer Zufallsfolge aufeinander folgen.

Die Erfindung wird im vorliegenden Fall anhand der Zeichnungen erläutert. Es zeigen:
- Figur 1:: Ausführungsbeispiel des erfindungsgemäßen optischen Sensors in Form einer Einweglichtschranke.
- Figur 2:: Ausführungsbeispiel des erfindungsgemäßen optischen Sensors in Form einer Reflexionslichtschranke.
- Figur 3:: Ausführungsbeispiel des erfindungsgemäßen optischen Sensors in Form eines Lichtvorhangs.
- Figur 4:: Ausführungsbeispiel des erfindungsgemäßen optischen Sensors in Form eines Reflex-Lichtvorhangs.
- Figur 5:: Schaltungskomponenten zur Auswertung der Empfangssignale eines Empfängers des optischen Sensors gemäß Figur 1 bis 4.
- Figur 6:: Schematische Darstellung des optischen Sensors gemäß Figur 1 mit diesem zugeordneten Testmitteln.
- Figur 7a-f:: Zeitdiagramme von Signalverläufen bei der Testung des optischen Sensors gemäß Figur 6.

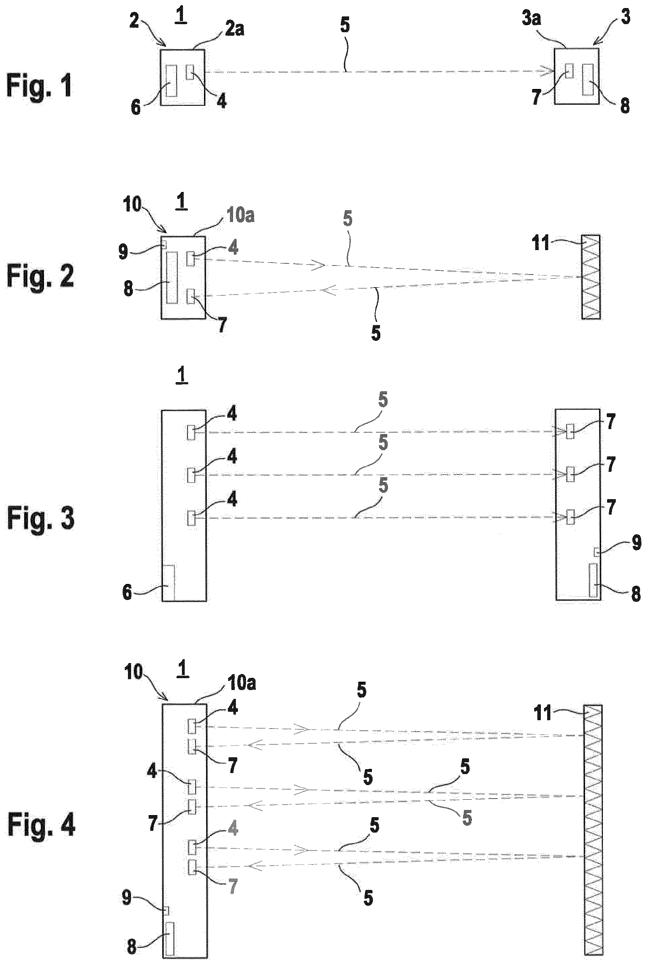

Figur 1 zeigt eine Ausführungsform des erfindungsgemäßen optischen Sensors 1 in Form einer Einweglichtschranke. Der so ausgebildete optische Sensor 1 weist eine Sendereinheit 2 und eine Empfängereinheit 3 auf, die an gegenüberliegenden Rändern eines mit dem optischen Sensor 1 überwachten Überwachungsbereichs angeordnet sind. Die Sendereinheit 2 umfasst ein Gehäuse 2a, in welchem ein Lichtstrahlen 5 emittierender Sender 4 und eine Steuereinheit 6 zur Ansteuerung des Senders 4 integriert sind. Der Sender 4 kann von einer Leuchtdiode gebildet sein, die Steuereinheit 6 besteht aus einer Rechnereinheit. Die Empfängereinheit 3 weist ein Gehäuse 3a auf, in dem ein Lichtstrahlen 5 empfangender Empfänger 7 und eine Auswerteeinheit 8 integriert sind. Der Empfänger 7 kann von einer Photodiode gebildet sein, die Auswerteeinheit 8 besteht aus einer Rechnereinheit. An die Auswerteeinheit 8 ist ein Schaltausgang 9 angeschlossen. Dem Sender 4 kann eine nicht dargestellte Sendeoptik zur Strahlformung der Lichtstrahlen 5 zugeordnet sein. Dem Empfänger 7 kann entsprechend eine nicht dargestellte Empfangsoptik zugeordnet sein.

Die Ausbildung dieser Sensorkomponenten ist in entsprechender Weise auch bei dem in den Figuren 2 bis 4 dargestellten optischen Sensor 1 verwirklicht.

Der optische Sensor 1 gemäß Figur 1 wird, wie auch die optischen Sensoren 1 der Figuren 2 bis 4, im Bereich der Sicherheitstechnik eingesetzt. Dabei wird als Überwachungsbereich ein Gefahrenbereich an einer Maschine oder Anlage überwacht. Wird mit dem optischen Sensor 1 ein gefahrbringender Objekteingriff im Überwachungsbereich festgestellt, wird mittels des optischen Sensors 1 die Maschine oder Anlage stillgesetzt.

Hierzu wird in der Auswerteeinheit 8 aus den Empfangssignalen des Empfängers 7 ein binäres Schaltsignal generiert, dessen Schaltzustände angeben, ob sich ein Objekt im Überwachungsbereich befindet oder nicht. Dieses Schaltsignal wird über den Schaltausgang 9 zur Steuerung der Maschine oder Anlage ausgegeben.

Da der optische Sensor 1 gemäß Figur 1 nur ein Sender-/ Empfängerpaar aufweist, wird das Schaltsignal allein aus den Empfangssignalen des einen Empfängers 7 gebildet.

Bei freiem Überwachungsbereich treffen die Lichtstrahlen 5 des Senders 4 ungehindert auf den Empfänger 7. Bei einem Objekteingriff in den Überwachungsbereich werden die Lichtstrahlen 5 unterbrochen und gelangen nicht mehr ungehindert zum Empfänger 7. Durch eine Schwellwertbewertung des Empfangssignals wird in der Auswerteeinheit 8 ein digitales Ausgangssignal generiert, welches das binäre Schaltsignal bildet.

Der optische Sensor 1 gemäß Figur 2 ist als Reflexionslichtschranke ausgebildet. Im Unterschied zum optischen Sensor 1 gemäß Figur 1 ist in diesem Fall an einem Rand des Überwachungsbereichs eine Sender/- Empfängereinheit 10 vorgesehen, in deren Gehäuse 10a der Sender 4 und der Empfänger 7 vorgesehen sind. Die in der Sender/- Empfängereinheit 10 integrierte Auswerteeinheit 8 dient in diesem Fall nicht nur zur Auswertung der Empfangssignale des Empfängers 7, sondern auch zur Ansteuerung des Senders 4. An die Auswerteeinheit 8 ist wieder der Schaltausgang 9 angeschlossen. Am gegenüberliegenden Rand des Überwachungsbereichs befindet sich ein Reflektor 11, insbesondere ein Retroreflektor, so dass bei freiem Überwachungsbereich die vom Sender 4 emittieren Lichtstrahlen 5 über den Reflektor 11 ungehindert zum Empfänger 7 gelangen. Die Signalauswertung erfolgt identisch zur Ausführungsform gemäß Figur 1.

Figur 3 zeigt einen als Lichtvorhang ausgebildeten optischen Sensor 1. Dieser Lichtvorhang stelle eine Erweiterung gegenüber der Einweglichtschranke gemäß Figur 1 dahingehend dar, dass mehrere Sender-/ Empfängerpaare vorgesehen sind, mittels derer ein flächiger Überwachungsbereich überwacht wird. Die Sender 4 werden bevorzugt zyklisch einzeln nacheinander aktiviert. Durch eine optische Synchronisation über die Lichtstrahlen 5 werden die zugeordneten Empfänger 7 synchron aktiviert, so dass immer nur jeweils ein Sender-/ Empfängerpaar aktiv ist. Die Signalauswertung ist gegenüber der Ausführungsform dahingehend erweitert, dass für alle Strahlachsen durch eine Schwellwertbewertung der Empfangssignale des jeweiligen Empfängers 7 ein digitales Ausgangssignal generiert wird, dessen binäre Signalzustände angeben, ob der Lichtweg der Lichtstrahlen 5 unterbrochen ist oder nicht. Ist nur eine Strahlachse unterbrochen, nimmt das über den Schaltausgang 9 ausgegebene Schaltsignal den Schaltzustand "Objekt erkannt" ein. Nur wenn bei keiner Strahlachse ein Objekteingriff festgestellt wird, nimmt das Schaltsignal den Schaltzustand "freier Überwachungsbereich" an.

Figur 4 schließlich stellt eine Erweiterung der Reflexionslichtschranke gemäß Figur 2 auf einen Reflex-Lichtvorhang dar, welcher mehrere Sender-/ Empfängerpaare aufweist. Die Ansteuerung der Sender-/ Empfängerpaare erfolgt über die Auswerteeinheit 8 analog zur Ausführungsform gemäß Figur 3. Ebenso erfolgt die Signalauswertung analog zur Ausführungsform gemäß Figur 3.

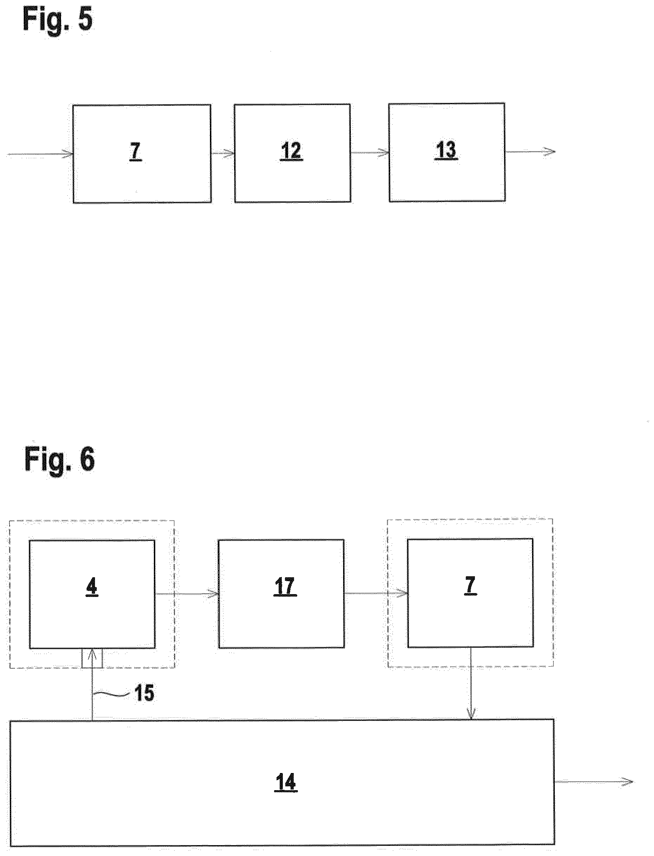

Figur 5 zeigt die empfangsseitigen Komponenten zur Generierung eines digitalen Ausgangssignals in Abhängigkeit der Empfangssignale eines Empfängers 7 des optischen Sensors 1 gemäß den Figuren 1 bis 4.

Wie aus Figur 5 ersichtlich, ist dem Empfänger 7 eine Verstärkereinheit 12, bestehend aus einem Verstärker und einem Tiefpass sowie eine Schwellwerteinheit 13 nachgeordnet. Die Schwellwerteinheit 13 kann von einem Komparator gebildet sein, wobei dieser Bestandteil der Auswerteeinheit 8 sein kann. Das analoge Empfangssignal wird im Verstärker verstärkt und im Tiefpass gebildet. Durch die Schwellwertbewertung in der Schwellwerteinheit 13 wird ein digitales Ausgangssignal generiert, welches im Arbeitsbetrieb des optischen Sensors 1 angibt, ob ein Objekt vorhanden ist oder nicht.

Figur 6 zeigt eine Ausführungsform von Testmitteln zur fortlaufenden, vorzugsweise zyklischen Testung des optischen Sensors 1 gemäß Figur 1. Die Testmittel umfassen eine Testeinheit 14, die von einer Rechnereinheit gebildet ist. Die Testeinheit 14 kann in der Empfängereinheit 3 integriert sein und insbesondere Bestandteil der Auswerteeinheit 8 sein. Weiterhin weisen die Testmittel ein Anschlussmittel 15 auf, über welches von der Testeinheit 14 generierte Testsignale über einen Testeingang 16 der Sendereinheit 2 dem Sender 4 zugeführt werden können. Schließlich ist in Figur 16 als Messstrecke 17 der Lichtweg der Lichtstrahlen 5 im Überwachungsbereich zur Objekterfassung angegeben.

Mit diesen Testmitteln wird die vom Sender/- Empfängerpaar des optischen Sensors 1 gemäß Figur 1 generierte Messstrecke 17 mit allen zugeordneten optischen und elektrischen Komponenten überwacht.

Dieselbe Art der Testung erfolgt für den optischen Sensor 1 gemäß Figur 2, wobei in diesem Fall alle Testmittel in der Auswerteeinheit 8 integriert sein können. In diesem Fall wird auch kein Testeingang 16 benötigt. Vielmehr können die in der Auswerteeinheit 8 integrierten Testmittel Aktivierungsmittel aufweisen, um den Sender 4 mit Testsignalen zu beaufschlagen.

Bei den Ausführungsformen des optischen Sensors 1 gemäß den Figuren 3 und 4 ist die Funktionalität der Testmittel dahingehend erweitert, dass mit diesem alle Strahlachsen des Lichtvorhangs getestet werden können.

Für eine Testung der vom Sender/- Empfängerpaar gebildeten Strahlachse erfolgt mit den Testmitteln gemäß Figur 6 eine Umschaltung vom Arbeitsbetrieb in einen Testbetrieb derart, dass über den Testeingang 16 das von Sender 4 emittierte Licht in charakteristischer Weise geändert wird.

Emittiert der Sender 4 beispielsweise im Arbeitsbetrieb einzelne Lichtimpulse, so sind die Testsignale dann beispielsweise Testlichtimpulse, die sich von den Lichtimpulsen hinsichtlich Impulsanzahl, Impulsfrequenz, Impulsbreite und/oder Amplitude unterscheiden.

Emittiert der Sender im normalen Arbeitsbetrieb Dauerlicht, das heißt einen zeitlich nicht unterbrochenen Lichtstrahl, so kann diesem Lichtstrahl mit den Testmitteln eine Änderung aufgeprägt, insbesondere aufmoduliert werden.

In beiden Fällen können mit den Lichtstrahlen im Arbeitsbetrieb und auch im Testbetrieb Objekte im Überwachungsbereich erkannt werden.

Durch die veränderte Lichtaussendung des Senders 4 im Testbetrieb ändert sich entsprechend das digitale Ausgangssignal, das mit der Schaltung gemäß Figur 5 generiert wird, in charakteristischer Weise. In der Testeinheit 14 ist als Erwartungsschaltung für den fehlerfreien Zustand der Strahlachse ein Sollsignal abgespeichert. Typischerweise enthält das Schaltsignal bestimmte Merkmale des digitalen Ausgangssignals, insbesondere Impulsbreiten eins oder mehrerer Signalpulse, Impulsabstände zwischen Signalpulsen, Signalpegel oder Einschaltflanken, beziehungsweise Ausschaltflanken des digitalen Ausgangssignals. Dabei definiert das Sollsignal generell den Signalzustand des digitalen Ausgangssignals bei freiem Überwachungsbereich.

In der Testeinheit 14 wird dann das während des Testbetriebs erhaltene digitale Ausgangssignal mit dem Sollsignal verglichen. Ein fehlerfreier Zustand liegt dann vor, wenn das digitale Ausgangssignal mit dem Sollsignal übereinstimmt. Wird dagegen keine Übereinstimmung festgestellt, liegt ein Fehler vor. Mit dieser Überwachung können Fehlerfunktionen aller elektronischen und optischen Komponenten der Strahlachse, insbesondere des Senders 4, des Empfängers 7, der Sende- beziehungsweise Empfangsoptik oder auch der dem Empfänger 7 nachgeschalteten Schaltungskomponenten aufgedeckt werden.

Als Reaktion auf eine Erkennung eines Fehlers wird vom optischen Sensor 1 einerseits eine Fehlermeldung ausgegeben. Weiterhin wird der Schaltausgang 9 in den Schaltzustand geschaltet, welcher zu einem Stillsetzen der Maschine oder Anlage führt, so dass das zu überwachende System in den sicheren Zustand überführt wird.

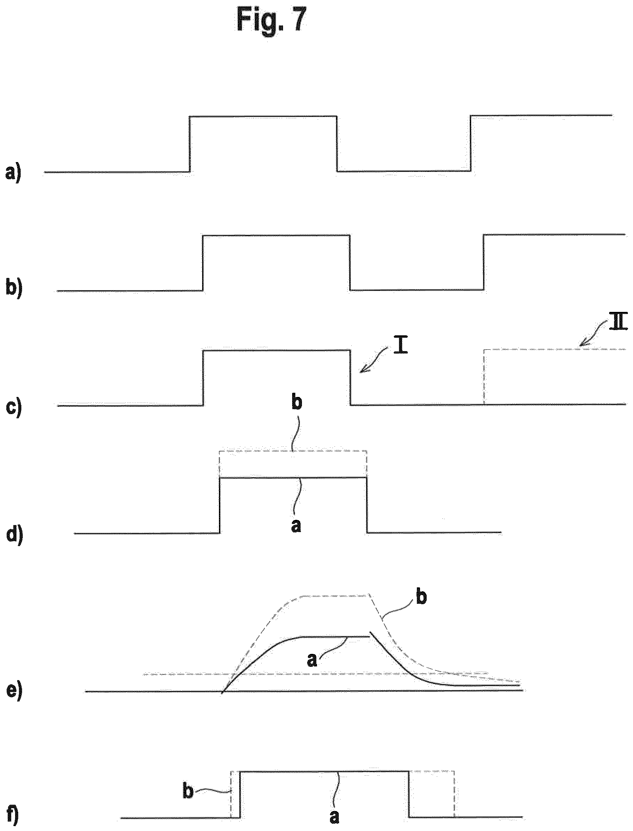

Die Zeitdiagramme der Figuren 7a-f zeigen ein Beispiel einer Testung für die Anordnung gemäß Figur 6.

Figur 7a zeigt den zeitlichen Verlauf der über den Testeingang 16 zum Sender 4 geführten Steuersignale für den Testbetrieb des Senders 4. Figur 7b zeigt die hierzu entsprechenden vom Sender 4 emittierten Testsignale in Form von Testlichtimpulsen. Figur 7c zeigt schematisch die auf den Empfänger 7 auftreffenden Testlichtimpulse (I) beziehungsweise gestrichelt die durch ein Objekt abgebrochen und damit nicht auf den Empfänger 7 auftreffenden Testlichtimpulse (I).

Figur 7d zeigt den Verlauf des Empfangssignals am Ausgang des Empfängers 7, das durch den auftreffenden Testlichtimpuls generiert wird. Dabei ist mit a (durchgezogene Linie) der fehlerfreie Fall gezeigt. Weiterhin ist mit b (gestrichelte Linie) ein Fehlerfall bedingt durch eine zu hohe Sendeleistung oder eine zu hohe Verstärkung des Empfangssignals dargestellt.

Figur 7e zeigt seitlichen Verlauf des Empfangssignals nach der Tiefpassfilterung in der Verstärkereinheit 12. Der Tiefpass verzögert Signale bei höheren Amplituden stärker als bei geringen, wodurch sich flachere Einschalt- und Ausschaltflanken des Empfangssignals ergeben. In Figur 7e ist (wie auch in Figur 7f) wiederum mit a der fehlerfreie Zustand und mit b das Signal im Fehlerfall bezeichnet.

Wie aus Figur 7e ersichtlich, verschiebt sich im Fehlerfall der seitliche Verlauf des tiefpassgebildeten Signals gegenüber dem fehlerfreien Zustand. Demensprechend verschieben sich auch die Ein- und Ausschaltflanken des durch die Schwellwerteinheit 13 generierten digitalen Ausgangssignals (Figur 7f) im Fehlerfall.

In der Testeinheit 14 werden in diesem Fall als Sollsignale die Einschalt- und Ausschaltflanken des digitalen Ausgangssignals im fehlerfreien Zustand, der in Figur 7f mit a bezeichnet ist, abgespeichert. Durch den Vergleich des aktuellen digitalen Ausgangssignals mit diesen Sollsignalen kann dann ein Fehler aufgedeckt werden. Dies zeigt Figur 7f. Dort weicht das digitale Ausgangssignal im Fehlerfall (bezeichnet mit b) vom fehlerfreien Zustand (bezeichnet mit a) ab, so dass dann in der Testeinheit 14 eine entsprechende Fehlermeldung generiert wird.

### Bezugszeichenliste

- (1): Optischer Sensor
- (2): Sendereinheit
- (2a): Gehäuse
- (3): Empfängereinheit
- (3a): Gehäuse
- (4): Sender
- (5): Lichtstrahlen
- (6): Steuereinheit
- (7): Empfänger
- (8): Auswerteeinheit
- (9): Schaltausgang
- (10): Sender/- Empfängereinheit
- (10a): Gehäuse
- (11): Reflektor
- (12): Verstärkereinheit
- (13): Schwellwerteinheit
- (14): Testeinheit
- (15): Anschlussmittel
- (16): Testeingang
- (17): Messstrecke

## Patentansprüche

1. Optischer Sensor (1) zur Erfassung von Objekten in einem Überwachungsbereich, mit wenigstens einem Lichtstrahlen (5) emittierenden Sender (4) und wenigstens einem Lichtstrahlen (5) empfangenden Empfänger (7), wobei der Sender (4) und der Empfänger (7) so angeordnet sind, dass bei freiem Überwachungsbereich die Lichtstrahlen (5) des Senders (4) ungehindert auf den Empfänger (7) treffen und bei einem Objekteingriff im Überwachungsbereich die Lichtstrahlen (5) auf das Objekt treffen und nicht oder nur unvollständig zum Empfänger (7) gelangen, wobei eine Auswerteeinheit (8) vorgesehen ist, in welcher in Abhängigkeit von am Ausgang des Empfängers (7) anstehenden Empfangssignalen ein binäres Schaltsignal generiert wird, dessen Schaltzustände angeben, ob sich ein Objekt im Überwachungsbereich befindet oder nicht, **dadurch gekennzeichnet, dass** Testmittel vorgesehen sind, mittels derer der Sender (4) derart betrieben ist, dass er ein sich von den Lichtstrahlen unterscheidendes Testsignal emittiert, dass das bei freiem Überwachungsbereich empfangene Testsignal in ein digitales Ausgangssignal gewandelt und dieses mit einem in den Testmitteln gespeicherten digitalen Sollsignal für eine Fehlerkontrolle des optischen Sensors (1) verglichen wird.

2. Optischer Sensor nach Anspruch 1, **dadurch gekennzeichnet, dass** das Sollsignal den fehlerfreien Zustand des optischen Sensors (1) definiert.

3. Optischer Sensor nach einem der Ansprüche 1 oder 2, **dadurch gekennzeichnet, dass** mit den Testmitteln die Testsignale derart generiert werden, dass die vom Sender emittierten Lichtstrahlen geändert werden.

4. Optischer Sensor nach einem der Ansprüche 1 bis 3, **dadurch gekennzeichnet, dass** der oder jeder Sender (4) als Testsignal ein Lichtsignal mit bestimmter Impulsanzahl, Impulsfrequenz, Impulsbreite und/oder Amplitude emittiert.

5. Optischer Sensor nach einem der Ansprüche 1 bis 4, **dadurch gekennzeichnet, dass** das Sollsignal von Merkmalen des digitalen Ausgangssignals im fehlerfreien Zustand gebildet ist.

6. Optischer Sensor nach Anspruch 5, **dadurch gekennzeichnet, dass** Merkmale des Schaltsignals von Impulsbreiten eines oder mehreren Signalpulsen des digitalen Ausgangssignals gebildet sind.

7. Optischer Sensor nach einem der Ansprüche 5 oder 6, **dadurch gekennzeichnet, dass** Merkmale des Sollsignals von Impulsabständen zwischen Signalpulsen des digitalen Ausgangssignals gebildet sind.

8. Optischer Sensor nach einem der Ansprüche 5 bis 7, **dadurch gekennzeichnet, dass** Merkmale des Sollsignals von Signalpegeln eines oder mehrerer Signalpulse des digitalen Ausgangssignals gebildet sind.

9. Optischer Sensor nach einem der Ansprüche 5 bis 8, **dadurch gekennzeichnet, dass** Merkmale des Sollsignals von Einschaltflanken und/oder Ausschaltflanken von Signalpulsen des digitalen Ausgangssignals gebildet sind.

10. Optischer Sensor nach einem der Ansprüche 1 bis 9, **dadurch gekennzeichnet, dass** zur Generierung des digitalen Ausgangssignals ein Schwellwertgenerator vorgesehen ist.

11. Optischer Sensor nach Anspruch 10, **dadurch gekennzeichnet, dass** zwischen dem Empfänger (7) und dem Schwellwertgenerator ein Verstärker und ein diesem nachgeschalteter Tiefpass vorgesehen sind.

12. Optischer Sensor nach einem der Ansprüche 1 bis 11, **dadurch gekennzeichnet, dass** die Testmittel in diesem integriert sind.

13. Optischer Sensor nach Anspruch 12, **dadurch gekennzeichnet, dass** die Testmittel Bestandteil der Auswerteeinheit (8) sind.

14. Optischer Sensor nach einem der Ansprüche 1 bis 11, **dadurch gekennzeichnet, dass** die Testmittel eine Testeinheit (14) aufweisen, die über einen Testeingang (16) an den optischen Sensor (1) anschließbar ist.

15. Optischer Sensor nach einem der Ansprüche 1 bis 14, **dadurch gekennzeichnet, dass** dieser ein Lichtvorhang mit einer Mehrfachanordnung von Sender-/ Empfängerpaaren ist.

16. Optischer Sensor nach einem der Ansprüche 1 bis 15, **dadurch gekennzeichnet, dass** die Testmittel so ausgebildet sind, dass mit diesen eine zyklische Testung erfolgt.

17. Optischer Sensor nach einem der Ansprüche 1 bis 16, **dadurch gekennzeichnet, dass** bei Aufdeckung eines Fehlerfalls eine Fehlermeldung generiert wird.

18. Optischer Sensor nach einem der Ansprüche 1 bis 17, **dadurch gekennzeichnet, dass** bei Aufdeckung eines Fehlerfalls eine Sicherheitsmaßnahme ausgelöst wird.

19. Optischer Sensor nach Anspruch 18, **dadurch gekennzeichnet, dass** bei Aufdeckung eines Fehlerfalls eine gefahrbringende externe Einheit deaktiviert wird.

20. Optischer Sensor nach einem der Ansprüche 1 bis 19, **dadurch gekennzeichnet, dass** die Testsignale nicht periodisch wiederholt werden.

21. Optischer Sensor nach Anspruch 20, **dadurch gekennzeichnet, dass** wenigstens zwei unterschiedliche Pausen zwischen zwei Testsignalen vorgesehen sind.

22. Optischer Sensor nach Anspruch 20, **dadurch gekennzeichnet, dass** die Testsignale mit einer Zufallsfolge aufeinander folgen.

## Claims

1. Optical sensor (1) for detecting objects in a monitoring region, comprising at least one transmitter (4) emitting light beams (5) and at least one receiver (7) receiving light beams (5), wherein the transmitter (4) and the receiver (7) are so arranged that when the monitoring region is free the light beams (5) of the transmitter (4) are incident without hindrance on the receiver (7) and when an object intervenes in the monitoring region the light beams (5) are incident on the object and do not pass or pass only incompletely to the receiver (7), wherein an evaluating unit (8) is provided in which there is generated in dependence on the received signals, which are present at the output of the receiver (7), a binary switching signal having switching states which indicate whether or not an object is present in the monitoring region, **characterised in that** test means are provided, by means of which the transmitter (4) is operated in such a way that it emits a test signal differing from the light beams, that the test signal received when the monitoring region is free is converted into a digital output signal and this is compared with a digital target signal, which is stored in the test means, for fault checking of the optical sensor (1).

2. Optical sensor according to claim 1, **characterised in that** the target signal defines the fault-free state of the optical sensor (1).

3. Optical sensor according to one of claims 1 and 2, **characterised in that** the test signals are generated in such a manner by the test means that the light beams emitted by the transmitter are changed.

4. Optical sensor according to any one of claims 1 to 3, **characterised in that** the or each transmitter (4) emits a light signal with a specific pulse number, pulse frequency, pulse width and/or amplitude as the test signal.

5. Optical sensor according to any one of claims 1 to 4, **characterised in that** the target signal is formed by features of the digital output signal in the fault-free state.

6. Optical sensor according to claim 5, **characterised in that** features of the switching signal are formed by pulse widths of one or more signal pulses of the digital output signal.

7. Optical sensor according to one of claims 5 and 6, **characterised in that** the features of the target signals are formed by pulse spacings between signal pulses of the digital output signal.

8. Optical sensor according to any one of claims 5 to 7, **characterised in that** features of the target signal are formed by signal levels of one or more signal pulses of the digital output signal.

9. Optical sensor according to any one of claims 5 to 8, **characterised in that** features of the target signal are formed by switch-on edges and/or switch-off edges of signal pulses of the digital output signal.

10. Optical sensor according to any one of claims 1 to 9, **characterised in that** a threshold value generator is provided for generating the digital output signal.

11. Optical sensor according to claim 10, **characterised in that** an amplifier and a lowpass filter downstream thereof are provided between the receiver (7) and the threshold value generator.

12. Optical sensor according to any one of claims 1 to 11, **characterised in that** the test means are integrated in this.

13. Optical sensor according to claim 12, **characterised in that** the test means are a component of the evaluating unit (8).

14. Optical sensor according to any one of claims 1 to 11, **characterised in that** the test means comprise a test unit (14) which is connectible with the output sensor (1) by way of a test input (16).

15. Optical sensor according to any one of claims 1 to 14, **characterised in that** this is a light curtain with a multiple arrangement of transmitter/receiver pairs.

16. Optical sensor according to any one of claims 1 to 15, **characterised in that** the test means are so constructed that a cyclic testing is carried out by this.

17. Optical sensor according to any one of claims 1 to 16, **characterised in that** on detection of a fault case a fault report is generated.

18. Optical sensor according to any one of claims 1 to 17, **characterised in that** on detection of a fault cause a security measure is triggered.

19. Optical sensor according to claim 18, **characterised in that** on detection of a fault case an external unit which brings risk is deactivated.

20. Optical sensor according to any one of claims 1 to 19, **characterised in that** the test signals are not periodically repeated.

21. Optical sensor according to claim 20, **characterised in that** at least two different pauses between two test signals are provided.

22. Optical sensor according to claim 20, **characterised in that** the test signals follow one another at a random sequence.

## Revendications

1. Capteur optique (1) pour la détection d'objets dans une zone de surveillance, comprenant au moins un émetteur (4) émettant des faisceaux lumineux (5) et au moins un récepteur (7) recevant des faisceaux lumineux (5), l'émetteur (4) et le récepteur (7) étant disposés de telle sorte que les faisceaux lumineux (5) de l'émetteur (4) frappent le récepteur (7) sans obstacle lorsque la zone de surveillance est libre et que, en cas d'intrusion d'un objet dans la zone de surveillance, les faisceaux lumineux (5) frappent l'objet et n'atteignent pas ou seulement partiellement le récepteur (7), une unité d'évaluation (8) étant prévue, dans laquelle un signal de commutation binaire est généré en fonction de signaux de réception présents à la sortie du récepteur (7), dont les états de commutation indiquent si un objet se trouve ou non dans la zone de surveillance, **caractérisé en ce que** des moyens de test sont prévus, au moyen duquel l'émetteur (4) est exploité de telle sorte qu'il émet un signal de test différent des faisceaux lumineux, que le signal de test reçu lorsque la zone de surveillance est libre est converti en un signal de sortie numérique et que celui-ci est comparé avec un signal de consigne numérique mémorisé dans les moyens de test pour un contrôle des erreurs du capteur optique (1).

2. Capteur optique selon la revendication 1, **caractérisé en ce que** le signal de consigne définit l'état sans erreur du capteur optique (1).

3. Capteur optique selon l'une des revendications 1 ou 2, **caractérisé en ce que** les signaux de test sont générés avec les moyens de test de telle sorte que les faisceaux lumineux émis par l'émetteur sont modifiés.

4. Capteur optique selon l'une des revendications 1 à 3, **caractérisé en ce que** le ou chaque émetteur (4) émet en tant que signal de test un signal lumineux ayant un nombre d'impulsions, une fréquence d'impulsions, une largeur d'impulsions et/ou une amplitude déterminés.

5. Capteur optique selon l'une des revendications 1 à 4, **caractérisé en ce que** le signal de consigne est formé par des caractéristiques du signal de sortie numérique à l'état sans erreur.

6. Capteur optique selon la revendication 5, **caractérisé en ce que** les caractéristiques du signal de commutation sont formées par des largeurs d'impulsions d'une ou plusieurs impulsions de signal du signal de sortie numérique.

7. Capteur optique selon l'une des revendications 5 ou 6, **caractérisé en ce que** les caractéristiques du signal de consigne sont formées par des intervalles d'impulsions entre les impulsions de signal du signal de sortie numérique.

8. Capteur optique selon l'une des revendications 5 à 7, **caractérisé en ce que** les caractéristiques du signal de consigne sont formées par des niveaux de signal d'une ou plusieurs impulsions de signal du signal de sortie numérique.

9. Capteur optique selon l'une des revendications 5 à 8, **caractérisé en ce que** les caractéristiques du signal de consigne sont formées par des fronts d'enclenchement et/ou des fronts de déclenchement d'impulsions de signal du signal de sortie numérique.

10. Capteur optique selon l'une des revendications 1 à 9, **caractérisé en ce qu'**un générateur de valeur seuil est prévu pour générer le signal de sortie numérique.

11. Capteur optique selon la revendication 10, **caractérisé en ce qu'**un amplificateur et un filtre passe-bas connecté en aval de celui-ci sont prévus entre le récepteur (7) et le générateur de valeur seuil.

12. Capteur optique selon l'une des revendications 1 à 11, **caractérisé en ce que** les moyens de test y sont intégrés.

13. Capteur optique selon la revendication 12, **caractérisé en ce que** les moyens de test font partie de l'unité d'évaluation (8).

14. Capteur optique selon l'une des revendications 1 à 11, **caractérisé en ce que** les moyens de test présentent une unité de test (14) qui peut être connectée au capteur optique (1) par l'intermédiaire d'une entrée de test (16).

15. Capteur optique selon l'une des revendications 1 à 14, **caractérisé en ce qu'**il s'agit d'un rideau lumineux avec un agencement multiple de paires émetteur/récepteur.

16. Capteur optique selon l'une des revendications 1 à 15, **caractérisé en ce que** les moyens de test sont conçus de sorte à pouvoir être utilisés pour un test cyclique.

17. Capteur optique selon l'une des revendications 1 à 16, **caractérisé en ce qu'**un message d'erreur est généré lorsqu'une erreur est détectée.

18. Capteur optique selon l'une des revendications 1 à 17, **caractérisé en ce qu'**une mesure de sécurité est déclenchée lorsqu'une erreur est détectée.

19. Capteur optique selon la revendication 18, **caractérisé en ce qu'**une unité externe dangereuse est désactivée lorsqu'une erreur est détectée.

20. Capteur optique selon l'une des revendications 1 à 19, **caractérisé en ce que** les signaux de test sont répétés de manière non périodique.

21. Capteur optique selon la revendication 20, **caractérisé en ce qu'**au moins deux pauses différentes sont prévues entre deux signaux de test.

22. Capteur optique selon la revendication 20, **caractérisé en ce que** les signaux de test se succèdent dans un ordre aléatoire.
